# EUROPEAN PATENT APPLICATION

(11) **EP 2 442 292 A2**
(43) Date of publication of application: **18.04.2012**
(21) Application number: 11184797.6
(22) Date of filing: 12.10.2011
(51) Int. Cl.: G09F 3/10, G09F 3/02

(54) **Adhesive label, method of producing the same, and apparatus for producing the same**

(30) Priority: 15.10.2010 JP 2010232906
(71) Applicant: Seiko Instruments Inc., Chiba-shi, Chiba (JP)
(72) Inventor: Sato, Yoshinori, Chiba-shi,, Chiba (JP); Tani, Kazuo, Chiba-shi,, Chiba (JP); Sanbongi, Norimitsu, Chiba-shi,, Chiba (JP)
(74) Representative: Cloughley, Peter Andrew

(57) **Abstract**

To obtain large adhesive strength by forming openings with a sufficient size and high precision in a non-adhesive layer of an adhesive label, and exposing an adhesive agent layer through the openings, heat or a physical force is applied to a non-adhesive layer formed on an adhesive agent layer, which is made of a pressure-sensitive adhesive agent and provided on one surface of a support of an adhesive label, to form openings with respect to slits formed in the non-adhesive layer, and the adhesive agent layer is exposed through the openings.

## Description

The present invention relates to an adhesive label, a method of producing the same, and an apparatus for producing the same.

Adhesive labels having adhesiveness have been widely used for displaying bar codes for point-of-sales (POS) of goods such as food, as tags for delivery, or for displaying contents of containers such as bottles and cans. In general, the adhesive label has, on one surface of a sheet-shaped support, a pressure-sensitive adhesive agent layer which is made of a pressure-sensitive adhesive agent to be pressed against and attached to an article during use. There is provided release paper (separator) that covers the pressure-sensitive adhesive agent layer so as not to cause a so-called blocking phenomenon in which adhesive labels adhere to one another when stored in an overlapped state. On the other surface of the support, a printing layer (for example, a thermosensitive recording layer) is formed, on which characters, marks, patterns, etc. have been printed or are printable. When the adhesive label is attached to an article, the release paper is peeled to expose the pressure-sensitive adhesive agent layer, and the pressure-sensitive adhesive agent layer is pressed against and attached to the article which is an adherend. Therefore, an operation of peeling the release paper is required, which is one factor for decreasing the operation efficiency. Further, because the release paper is coated with a release agent such as silicon, the peeled release paper is disposed of without being recycled as recycled paper or the like, which is a waste of resources and is not preferred from the viewpoint of the protection of environment.

In order to solve these problems, there has been proposed an adhesive label not using release paper. For example, there is an adhesive label in which a thin release agent layer made of silicon or the like is provided on a printing layer positioned on a surface opposed to the pressure-sensitive adhesive agent layer with a support interposed therebetween. The release agent layer of the adhesive label does not cover the pressure-sensitive adhesive agent layer unlike the release paper, and hence, the release agent layer is not required to be disposed of during use. Further, even when the adhesive labels provided with the release agent layers are stored in an overlapped manner, the pressure-sensitive adhesive agent layer and the release agent layer come into contact with each other. Thus, the adhesive labels do not adhere to one another, and a blocking phenomenon does not occur.

Further, there is an adhesive label provided with, in place of the pressure-sensitive adhesive agent layer, a thermosensitive adhesive agent layer that is non-adhesive at room temperature but exhibits adhesiveness when heated (e.g., Japanese Patent Application Laid-open Nos. 2000-103969 and 2006-083196). Specifically, there is provided a layer of a thermosensitive adhesive agent with a composition containing a synthetic resin, a solid plasticizer, and a tackifier. During heating, the solid plasticizer is melted to allow the synthetic resin to swell or to be softened, and the tackifier causes the thermosensitive adhesive agent layer to exhibit great adhesiveness. In the adhesive labels having the thermosensitive adhesive agent layers described in Japanese Patent Application Laid-open Nos. 2000-103969 and 2006-083196, the thermosensitive adhesive agent layer does not exhibit adhesive strength at room temperature and exhibits adhesiveness by being heated to a predetermined temperature or higher. Therefore, the blocking can be prevented while such adhesive labels are stored in an overlapped manner at room temperature, which renders release paper unnecessary. Thus, effects can be obtained in the protection of environment and the reduction in cost involved in the reduction of the number of parts.

As another example of the conventional adhesive label, Japanese Patent Application Laid-open No. Hei 09-111203 discloses an adhesive label having a configuration in which a pressure-sensitive adhesive agent layer is provided on one surface of a support (base sheet), and a thermally readily breakable microcapsule layer is provided on the surface of the pressure-sensitive adhesive agent layer. At room temperature, even when the adhesive labels are stored in an overlapped manner, the adhesive labels cannot exhibit adhesive strength because the pressure-sensitive adhesive agent layers are covered with the microcapsule layers, which prevents the blocking phenomenon in which the adhesive labels adhere to one another. Thus, the pressure-sensitive adhesive agent layer does not exhibit adhesive strength during storage. On the other hand, when the adhesive strength is required, the microcapsule layer is broken by heating to expose the lower pressure-sensitive adhesive agent layer. Thus, the adhesiveness can be exhibited.

Further, Japanese Patent Application Laid-open No. 2006-78733 discloses an adhesive label in which a printing layer is provided on one surface of a base, and a pressure-sensitive adhesive agent layer and a resin film (non-adhesive layer) covering the pressure-sensitive adhesive agent layer are provided on the other surface. At room temperature, even when the adhesive labels are stored in an overlapped manner, the pressure-sensitive adhesive agent layer cannot exhibit adhesive strength because the pressure-sensitive adhesive agent layer is covered with the resin film, and the blocking phenomenon in which the adhesive labels adhere to one another can be prevented. When the adhesive strength is required, the resin film is heated to form an opening by thermal reaction, and the lower pressure-sensitive adhesive agent layer is exposed through the opening. Thus, the adhesive label can be attached to an adherend.

The adhesive labels described in Japanese Patent Application Laid-open Nos. 2000-103969, 2006-083196, Hei 09-111203, and 2006-78733 do not require release paper, and hence, are excellent in the protection of environment and the reduction in cost.

The solid plasticizer contained in the thermosensitive adhesive agent of the adhesive label as disclosed in Japanese Patent Application Laid-open Nos. 2000-103969 and 2006-083196 has a glass transition point of room temperature or lower, and most of the solid plasticizers are usually activated at room temperature or lower. Therefore, even in a stored state at room temperature, some adhesive strength is exhibited inevitably. That is, it is difficult to bring a thermosensitive adhesive agent layer completely in a non-adhesive state when the layer is stored at room temperature, and the anti-blocking property is not sufficient.

In order to solve those problems, it is conceivable to set the glass transition point of the solid plasticizer to be higher than room temperature to suppress the adhesiveness at room temperature, and thus enhance the anti-blocking property. However, when the glass transition point becomes high, larger heat energy is required for exhibiting adhesiveness. Originally, it is difficult to obtain very high adhesive strength considering the properties of the thermosensitive adhesive agent. In particular, in order to obtain sufficiently high adhesive strength with respect to an adherend having a non-smooth rough surface, it is desired to form a thick thermosensitive adhesive agent layer. However, when the thermosensitive adhesive agent layer becomes thick, larger heat energy is required for thermal activation. Therefore, a heat source having a large power source capacity needs to be used. Thus, it is difficult to prevent a blocking phenomenon at room temperature and ensure high adhesive strength with relatively low heat energy at the same time.

Further, the solid plasticizer contained in the thermosensitive adhesive agent has crystallinity depending upon temperature. Therefore, the solid plasticizer causes a rapid decrease in adhesiveness caused by recrystallization after thermal activation. It is necessary to selectively use a solid plasticizer depending upon the storage environment and use environment so as to ensure certain adhesive strength. Thus, there is a problem regarding mass-productivity.

Further, when a thermosensitive adhesive agent is melted by heating, using a thermal head of a thermal printer or the like as a heat source, the thermosensitive adhesive agent is directly brought into contact with the thermal head. Therefore, the molten thermosensitive adhesive agent may adhere to the thermal head, a platen roller opposed to the thermal head, or a part of a paper feed path as paste dirt. As a result, there is a problem that transportation of an adhesive label may fail and a paper jam may occur.

In contrast, the adhesive labels described in Japanese Patent Application Laid-open Nos. Hei 09-111203 and 2006-78733 can obtain anti-blocking properties at room temperature and have the pressure-sensitive adhesive agent layers. Therefore, when the microcapsule layer is broken or an opening is formed in the resin film by heating, high adhesive strength can be obtained.

However, in the microcapsule layer of the adhesive label of Japanese Patent Application Laid-open No. Hei 09-111203, the respective microcapsules have a sphere shape and are heated in a point-contact state with respect to a heat source such as a thermal head. Therefore, the heat transmission efficiency is low. Further, the shell of the thermally broken microcapsule remains on an adhesive agent to weaken the adhesive strength, or the shell of the microcapsule adheres to a thermal head as a heat source, etc. to degrade the heat efficiency further. Thus, thermal breakage becomes insufficient and required adhesive strength may not be obtained sufficiently.

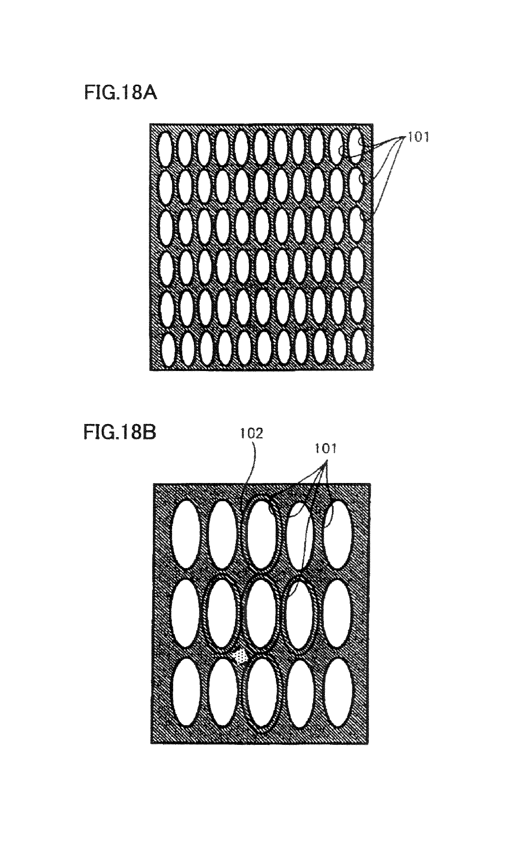

On the other hand, in the adhesive label of Japanese Patent Application Laid-open No. 2006-78733, the resin film placed on the surface of the pressure-sensitive adhesive agent layer is heated by a heat source such as a thermal head. At this time, a heat distribution is generated with a heating point by the heat source such as a thermal head being a peak of heat, and as illustrated in FIGS. 18A and 18B, the resin film starts melting from the heating point so that holes (openings) 101 are formed. The heat from the heat source gradually spreads from the heating point to the periphery. The size of the hole is determined by the heat conductivity peculiar to the resin and the magnitude of heat to be applied. Thus, there is a problem that, in order to form a larger hole in the same resin film, higher heat is required. Further, the adhesive strength of the pressure-sensitive adhesive agent layer, which is originally to act on an adherend, also acts on the resin film. Therefore, the adhesive strength becomes a factor for inhibiting the thermal deformation and thermal contraction of the resin film during heating. Consequently, the openings 101 cannot be formed with a sufficient size and high precision, and the adhesive strength of the pressure-sensitive adhesive agent layer to be exposed through the openings 101 may not be exhibited sufficiently.

An object of the present invention is therefore to provide an adhesive label in which an opening with a sufficient size and high precision is formed in a non-adhesive layer, and an adhesive agent layer made of a pressure-sensitive adhesive agent is exposed through the opening to obtain large adhesive strength, and to provide a method of producing the adhesive label, and an apparatus for producing the adhesive label.

An adhesive label according to the present invention includes: a support; an adhesive agent layer which is made of a pressure-sensitive adhesive agent, and formed on one surface of the support; and a non-adhesive layer which is formed on the adhesive agent layer, and includes an opening formed therein by application of one of heat and a physical force, the opening exposing the adhesive agent layer below the non-adhesive layer, in which the non-adhesive layer includes a slit with respect to which the opening is formed.

A method of producing an adhesive label according to the present invention includes: applying one of heat and a physical force to a non-adhesive layer formed on an adhesive agent layer, which is made of a pressure-sensitive adhesive agent and provided on one surface of a support, to form an opening with respect to a slit formed in the non-adhesive layer; and exposing the adhesive agent layer below the non-adhesive layer through the opening.

An apparatus for producing an adhesive label according to the present invention includes an adhesiveness exhibiting part, which is configured to: apply one of heat and a physical force to a non-adhesive layer formed on a pressure-sensitive adhesive agent layer, which is provided on one surface of a support, to efficiently form an opening with respect to a slit formed in the non-adhesive layer; and expose the adhesive agent layer below the non-adhesive layer through the opening.

According to the present invention, in a state in which the adhesive agent layer is covered with the non-adhesive layer, the adhesive labels can be prevented from adhering to one another. Further, release paper, etc. are not required, which is preferred from the viewpoint of the protection of environment and can keep the production cost low. Then, by forming the opening using the slit formed in the non-adhesive layer, a large opening can be formed easily with low energy, and hence, large adhesive strength can be exhibited. Further, by forming the slit in a desired shape, a desired opening is formed to obtain desired adhesion properties easily. Thus, the present invention enables a desired adhesion region and desired adhesive strength with good energy efficiency to be realized easily.

Embodiments of the present invention will now be described by way of further example only and with reference to the accompanying drawings, in which:
FIG 1 is a cross-sectional view of an adhesive label according to the present invention;
FIG 2A is a plan view of the adhesive label illustrated in FIG 1 when openings are not formed;
FIG 2B is an enlarged view of an example of the adhesive label illustrated in FIG 1 when the openings are not formed;
FIG 2C is an enlarged view of another example of the adhesive label illustrated in FIG 1 when the openings are not formed;
FIG 3 is a schematic structural view of an example of an apparatus for producing an adhesive label according to the present invention;
FIG 4A is a plan view of the adhesive label illustrated in FIG 1 after the openings are formed;
FIG 4B is an enlarged view of the adhesive label illustrated in FIG 1 after the openings are formed;
FIG 5 is a schematic view illustrating relative movement of a non-adhesive layer and a heating portion of the adhesive label;
FIG 6A is an enlarged view illustrating one region of the non-adhesive layer illustrated in FIG 5;
FIGS. 6B to 6G are schematic views illustrating a thermally-contracting state of the region in a sequential order;
FIG 7 is a schematic structural view of another example of the apparatus for producing an adhesive label according to the present invention;
FIGS. 8A to 8G are plan views of the adhesive label of the present invention having various slits when the openings are not formed;
FIG 9A is a cross-sectional view of an adhesive label in which the depth of the slit is too large;
FIG 9B is a cross-sectional view of an adhesive label in which the depth of the slit is too small;
FIG 10 is a schematic structural view of still another example of the apparatus for producing an adhesive label according to the present invention;
FIG 11 is a schematic structural view of yet another example of the apparatus for producing an adhesive label according to the present invention;
FIG 12 is a plan view of the adhesive label, illustrating steps of forming a slit in the apparatus for producing an adhesive label of FIGS. 10 and 11;
FIG 13 is a schematic structural view of yet another example of the apparatus for producing an adhesive label according to the present invention;
FIG 14 is a schematic structural view of yet another example of the apparatus for producing an adhesive label according to the present invention;
FIGS. 15A to 15C are schematic views illustrating the steps of forming a slit and steps of forming openings in the apparatus for producing an adhesive label illustrated in FIG 14 in a sequential order;
FIG 16 is a schematic structural view of yet another example of the apparatus for producing an adhesive label according to the present invention;
FIGS. 17A to 17C are schematic views illustrating examples of a residue removal part of the apparatus for producing an adhesive label illustrated in FIG 16;
FIG 17D is an enlarged plan view illustrating a transport roller of the residue removal part illustrated in FIG 17C;
FIG 18A is a plan view of a conventional adhesive label after openings are formed; and
FIG 18B is an enlarged view of the conventional adhesive label after the openings are formed.

Hereinafter, an embodiment of the present invention is described with reference to the drawings. The same portions are denoted with the same reference symbols, and the description thereof may be omitted.

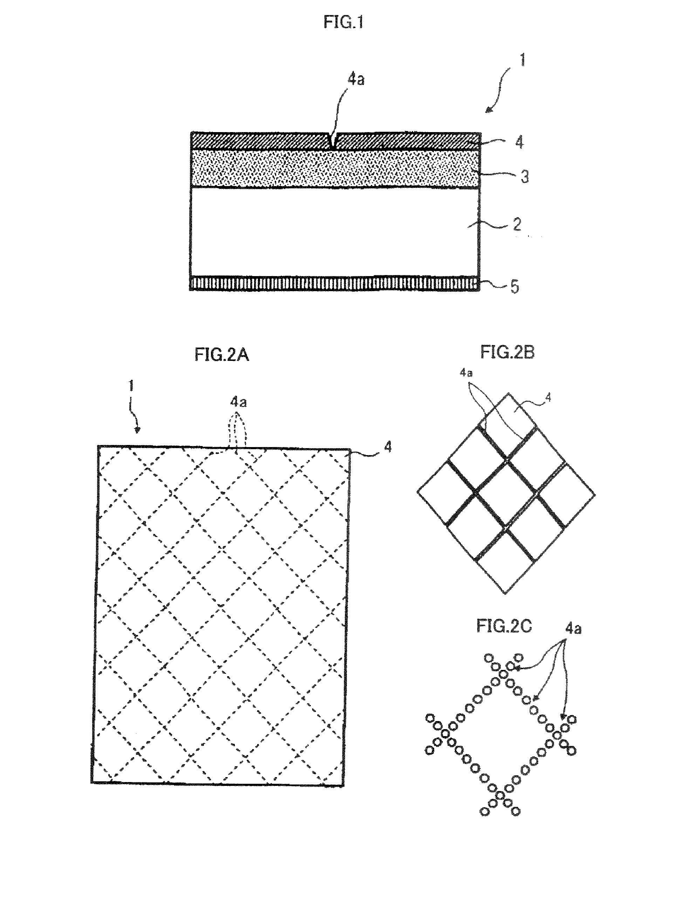

First, the configuration of an adhesive label according to one embodiment of the present invention is described with reference to FIGS. 1 and 2A to 2C. An adhesive label 1 illustrated in FIGS. 1 and 2A to 2C includes an adhesive agent layer 3 made of a pressure-sensitive adhesive agent on one surface of a non-adhesive support 2 in a sheet shape made of paper or a polymer base, and a non-adhesive layer 4 made of an olefin-based resin formed on the adhesive agent layer 3. The non-adhesive layer 4 is made of a resin film or a resin coating film, and is provided with slits 4a. On the other surface of the support 2, a printing layer 5 such as a thermosensitive recording layer is formed.

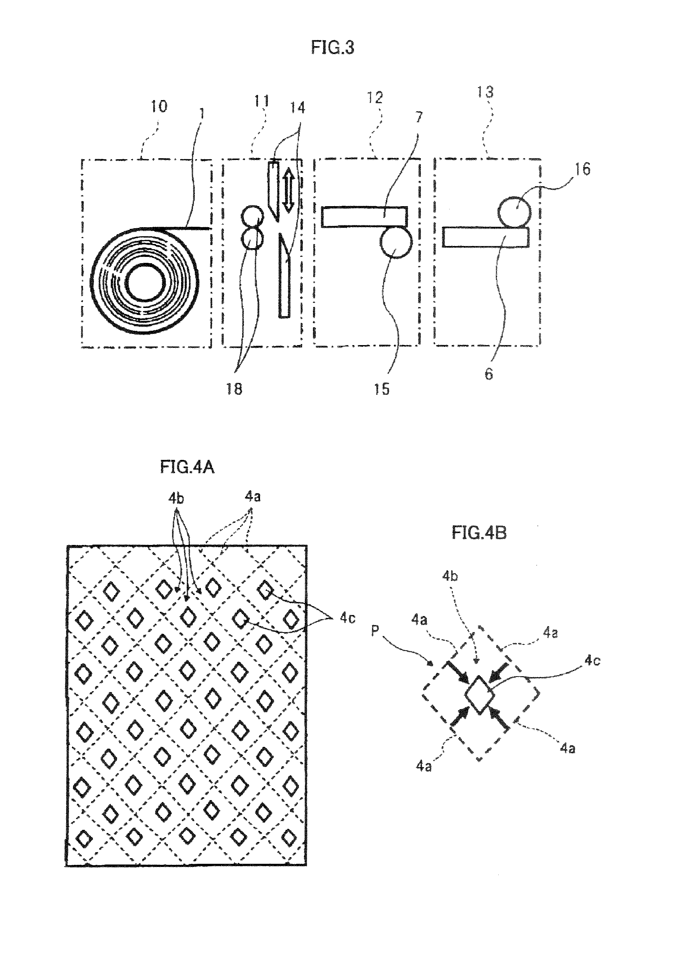

The adhesive label 1 which is not being heated as illustrated in FIGS. 1 and 2A to 2C cannot exhibit adhesiveness because the adhesive agent layer 3 is covered with the non-adhesive layer 4. Therefore, even when a plurality of adhesive labels 1 are stored in an overlapped manner or a long adhesive label 1 is wound into a roll shape as illustrated in FIG 3 to be stored, the adhesive labels 1 do not adhere to one another, which can prevent a so-called blocking phenomenon. Further, even when the adhesive label is transported in an unheated state, the adhesive surface is kept in a non-adhesive state, and hence, a paper-running property in an apparatus for producing an adhesive label is satisfactory.

When the adhesive label 1 is used, the non-adhesive layer 4 is selectively heated using heating means (see FIG 3) such as a thermal head 6 to allow the non-adhesive layer 4 to contract thermally, to thereby form openings 4b as illustrated in FIGS. 4A and 4B. Thus, the lower adhesive agent layer 3 is exposed to the outside through the openings 4b of the non-adhesive layer 4. When the adhesive agent layer 3 thus exposed to the outside is pressed against an adherend (not shown), the adhesive label 1 is attached to the adherend. The adhesive agent layer 3 is made of a pressure-sensitive adhesive agent, and hence, the adhesive label 1 can be attached to the adherend satisfactorily even if the surface of the adherend is rough. When the non-adhesive layer 4 thermally contracts satisfactorily in the present invention as illustrated in FIGS. 4A and 4B, a material constituting the non-adhesive layer 4 contracts to become small chips 4c, and the parts other than the small chips 4c are formed as the openings 4b of the non-adhesive layer 4 through which the lower adhesive agent layer 3 is exposed.

Before the non-adhesive layer 4 is heated, desired characters, marks, patterns, and the like are printed on the printing layer 5 of the adhesive label 1 by heating with another thermal head 7 (see FIG3) with the same configuration as that of the thermal head 6 for heating the non-adhesive layer 4. The desired characters, marks, patterns, and the like may be printed after the non-adhesive layer 4 is heated, and the thermal head 6 for heating the non-adhesive layer 4 may also be used for printing.

If the size, shape, and formation position of the openings 4b cannot be controlled as desired in the adhesive label 1 with such a configuration, the area of the adhesive agent layer 3 exposed to the outside and the position of the adhesive agent layer 3 exposed to the outside changes, resulting in the difficulty in obtaining desired adhesion properties. Further, if the openings cannot be formed large as illustrated in FIGS. 18A and 18B, large adhesive strength cannot be obtained.

In view of the above, in the present invention, the slits 4a are formed in the non-adhesive layer 4 in which the openings 4b are to be formed. The slits 4a are portions having small mechanical strength in the non-adhesive layer 4. Thus, when the non-adhesive layer 4 is heated using the heating means such as the thermal head 6 in the example illustrated in FIGS. 4A and 4B, the openings 4b start being formed from the slits 4a with small strength in the non-adhesive layer 4, and the non-adhesive layer 4 thermally contracts in the direction of the high adhesive strength by the adhesive agent layer 3.

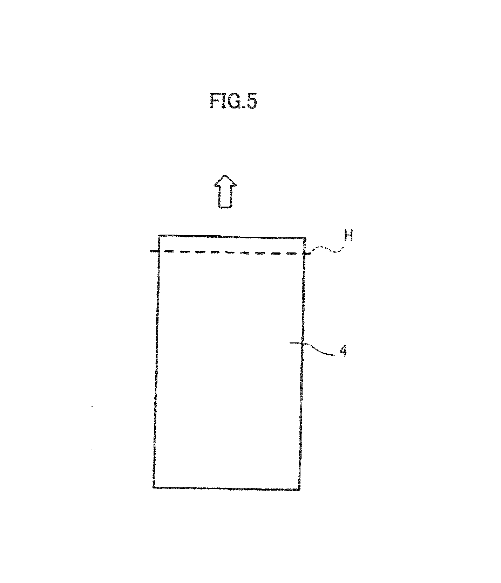

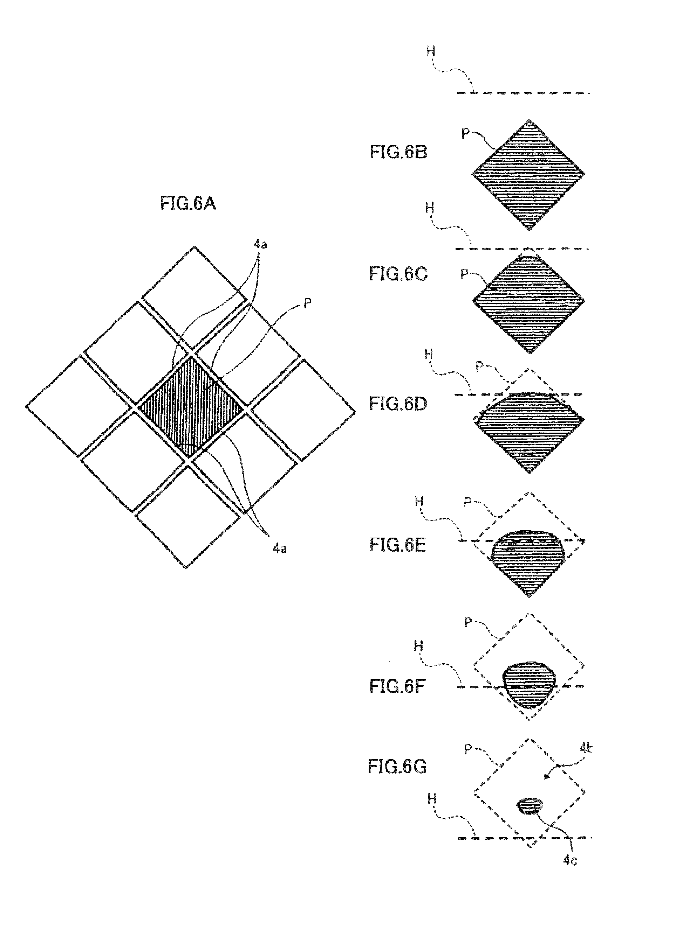

Specifically, as illustrated in FIG 5, as the non-adhesive layer 4 proceeds in the direction indicated by an arrow in the apparatus for producing an adhesive label, a heating position H by the thermal head 6 moves, and during the movement, the openings 4b are formed. The behavior of the non-adhesive layer 4 at this time is described with reference to FIGS. 6A to 6G

Considering a region P surrounded by the slits 4a of the non-adhesive layer 4 illustrated in FIG 6A, when the heating position H reaches the region P from a stage at which the region P is located away from the heating position H by the thermal head 6 (see FIG 6B), the resin thermally contracts from a portion in contact with the heating position H (see FIG 6C). At this time, the thermal contraction starts from the slits 4a, and the direction of the thermal contraction is a direction away from the heating position H (downward direction of FIGS. 6A to 6G). When the heating position H moves relative to the region P, a portion of the thermal contraction caused when the region P is opposed to the heating position H becomes larger (see FIGS. 6D and 6E). However, when the heating position H passes through the vicinity of the center of the region P, the direction of the thermal contraction caused when the region P is opposed to the heating position H is inverted. That is, the thermal contraction occurs toward a downstream side of the relative movement direction of the heating position H (in the upward direction of FIGS. 6A to 6G) with respect to the slits 4a (see FIG 6F). This is because the thermal contraction occurs toward the vicinity of the center of the region P surrounded by the plurality of slits 4a with respect to the portions of the slits 4a. Finally, as illustrated in FIG 6G, a small chip (residue 4c) remains in the vicinity of the center of the region P, and the other part becomes the opening 4b.

Because the openings 4b are thus formed by thermal contraction with respect to the slits 4a, it is not necessary to melt the resin for starting the formation of openings as illustrated in FIGS. 18A and 18B, and the heating temperature at a time of formation of openings can be lowered, which can realize the reduction in energy. Then, as illustrated in FIGS. 4A and 4B, only a small chip (residue 4c) of the material constituting the non-adhesive layer 4 remains in one region P. Almost all the portions except for positions where the small chips (residues 4c) remain become the openings 4b through which the adhesive agent layer 3 is exposed to the outside. In FIGS. 2A, etc., the slits 4a are indicated by broken lines. However, a continuous slit 4a may be formed as illustrated in FIG 2B, or an intermittent (discontinuous) slit 4a may be formed as illustrated in FIG 2C.

If the slits 4a are not provided, openings can be formed in the non-adhesive layer 4 with respect to the heating point by the heating means such as the thermal head 6. However, openings which are large enough cannot be formed. If the same amount of heat is applied to the non-adhesive layer 4, only small openings can be formed in the case where the slits 4a are not formed, compared with the case where the slits 4a are formed as in the present invention. In order to form larger openings, larger heat needs to be applied, which makes it difficult to form openings efficiently. This is caused by the following. That is, the direction of the thermal contraction is opposite to the direction in which the openings are enlarged, and the force in the direction of enlarging the openings inhibits the thermal contraction. In order to form large openings when the slits 4a are not formed, a large power source for the heating means is required for applying larger heat. This causes the enlargement of the main body of the apparatus for producing an adhesive label, which makes it difficult to realize a portable apparatus for producing an adhesive label.

In contrast, according to the present invention, the thermal contraction proceeds with respect to the slits 4a, and the openings 4b are formed. In other words, the slits 4a function as division lines for dividing the non-adhesive layer 4 into a plurality of regions, and one small chip (residue 4c) of the material constituting the non-adhesive layer 4 remains in each region (substantially at the center of the region) divided by the slits 4a. Thus, by forming the slits 4a, the position, size, and shape of the openings 4b can be controlled. As a result, desired adhesion properties of the adhesive label 1 can be realized. The residue 4c of the material constituting the non-adhesive layer 4 remaining in each region functions as a spacer, thereby suppressing the adhesive agent layer 3 from coming into direct contact with the thermal head 6 and other members. Thus, the adhesion of paste dirt to the thermal head 6 and the other members, and the paper jam and transport failure of the adhesive label 1, which are caused consequently, can be prevented.

FIG 3 is a schematic view of the apparatus for producing an adhesive label. The apparatus for producing an adhesive label includes a roll paper storage part 10, a roll paper cutting part 11, a recording part 12, and an adhesiveness exhibiting part 13.

The roll paper storage part 10 holds the adhesive label 1 wound into a roll shape. The adhesive label 1 unreeled from the roll paper storage part 10 is transported by transport rollers 18 to reach the position of cutter members 14 of the roll paper cutting part 11. The adhesive label 1 at the position of the cutter members 14 is cut to have a desired length by the cutter members 14. The cut adhesive label 1 is sent to the recording part 12. In the recording part 12, the adhesive label 1 is transported while being sandwiched by a platen roller 15, and desired printing is performed on the printing layer 5 by the thermal head 7 at a desired position. After that, the adhesive label 1 is transported to the adhesiveness exhibiting part 13. Needless to say, a downstream part of the label can be processed (produced) before an upstream part is cut.

The adhesive label 1 transported from the recording part 12 is heated at a desired position while being sandwiched between a platen roller 16 and the thermal head 6 in the adhesiveness exhibiting part 13. When the non-adhesive layer 4 is heated by the thermal head 6, thermal contraction starts from the slits 4a and the openings 4b are formed. In other words, one small chip (residue 4c) of the material constituting the non-adhesive layer 4 remains in each region (for example, the region P illustrated in FIGS. 5 and 6A to 6G) divided by the slits 4a, and almost all the portions other than the small chips become the openings 4b.

When the adhesive label 1 with the openings 4b thus formed therein is pressed against an adherend (not shown), the adhesive agent layer 3 exposed through the openings 4b adheres to the adherend, and the pressure-sensitive adhesive agent of the adhesive agent layer 3 adheres to the adherend while being deformed along the adherend surface.

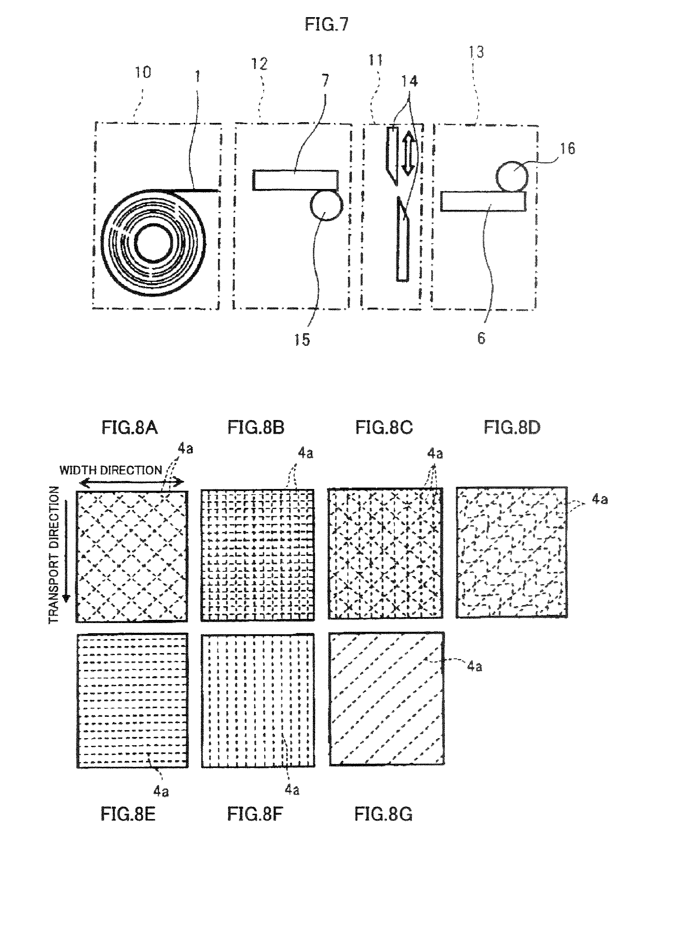

In order to transport the adhesive label 1 with good precision, the transportation may be monitored using a sensor or the like (not shown). Further, as illustrated in FIG 7, the roll paper cutting part 11 may be positioned on a downstream side from the recording part 12. However, it is preferred that the roll paper cutting part 11 be positioned on an upstream side from the adhesiveness exhibiting part 13.

As described above, the adhesive label 1 of this embodiment is capable of controlling the position, size, and shape of the openings 4b of the non-adhesive layer 4 through which the adhesive agent layer 3 is exposed. Thus, desired adhesion properties, specifically, desired adhesive strength and the like in the entire adhesive label 1 can be obtained. Further, the formation of the non-adhesive portion, and the position, size, and shape thereof can also be controlled.

The slits 4a may have a curved shape instead of a straight shape as illustrated in FIGS. 2A to 2C. FIGS. 8A to 8F illustrate various examples of the slits 4a. It is preferred that the slits 4a be formed so as to divide the non-adhesive layer 4 into a plurality of closed regions as in the examples illustrated in FIGS. 8A to 8D.

When the regions divided by the slits 4a are too small, there is a risk that a partial region of the non-adhesive layer 4 may be peeled while being in contact with the thermal head, platen roller, or transport path during the transportation in the apparatus for producing an adhesive label. In this case, in addition to the degradation of a paper-running property in the apparatus for producing an adhesive label, there arises a problem that dirt may scatter in the apparatus for producing an adhesive label. On the other hand, when the regions divided by the slits 4a are too large, uniform contraction may not be performed in each region. As a result, the shape and size of the openings 4b become uneven, which makes it impossible to realize desired adhesion properties. Considering the matter above, in general, it is preferred that the slits 4a be formed so that the length of each side of each region divided by the slits 4a becomes about 1 to 10 mm.

In order to prevent a partial region of the non-adhesive layer 4 from being peeled as described above, as illustrated in FIGS. 8A to 8D, 8F, and 8G, it is preferred to form the slits 4a extending in the same direction as the transport direction in the apparatus for producing an adhesive label or in the direction diagonal to the transport direction. Further, in order to prevent a partial region of the non-adhesive layer 4 from being peeled, it is preferred that the adhesive label 1 be transported in the apparatus for producing an adhesive label while the adhesive label 1 is not extremely folded or bent. Further, it is preferred that each member in the apparatus for producing an adhesive label be laid out so as to minimize the number of members that come into contact with the non-adhesive layer 4. It is also effective to use a material with a low friction coefficient for a portion that comes into contact with the non-adhesive layer 4 or coat the portion that comes into contact with the non-adhesive layer 4 with a resin.

Further, it is preferred to minimize a pressure to be applied from the platen roller 15 that comes into contact with the non-adhesive layer 4 during recording on the printing layer 5. For this purpose, it is preferred to add a roller for transportation before the thermal head 7. Further, it is also effective to coat the surface of the thermal head 7 with a material having a low friction coefficient. Further, in order to reduce the contact area between the thermal head 7 and the printing layer 5, an end-face type or near-edge type thermal head 7 may be used. Further, it is also effective to provide an overcoat layer for reducing friction on the surface of the printing layer 5. The reduction in friction between the thermal head 7 and the printing layer 5 leads to the satisfactory transportation by the platen roller 15.

It is preferred that the thickness of the non-adhesive layer 4 be small so that the thermal contraction is caused easily by the heating means such as the thermal head 6, and it is preferred that the thickness of the non-adhesive layer 4 be small even for exposing the adhesive agent layer 3 easily through the openings 4b to allow the pressure-sensitive adhesive agent to seep. As an example, the non-adhesive layer 4 is formed to a thickness of 10 µm or less. On the other hand, in order to cover the adhesive agent layer 3 to prevent blocking, the non-adhesive layer 4 needs to have some thickness. Considering the risk of production defects, production errors, the ease of handling at a time of formation of a layer (particularly, when the non-adhesive layer 4 in a resin film shape is attached), it is preferred that the thickness of the non-adhesive layer 4 be 1 µm or more.

In this embodiment, because the thermal head 6 is used as the heating means, the openings 4b can be formed only in a part of the adhesive label 1 to allow the adhesive label 1 to exhibit adhesive strength. The thermal head 6 has satisfactory thermal responsiveness and does not cause any waste such as pre-heating of the heating means, and hence, the thermal head 6 has satisfactory energy efficiency. Further, due to the absence of waste heating, during heating of the non-adhesive layer 4, accidental color development can be avoided with respect to the printing layer (thermosensitive recording layer) 5 formed on the other surface of the support 2. In the case of forming the openings 4b only in a part of the non-adhesive layer 4, the size of each region divided by the slits 4a becomes a minimum size of the adhesive portion and the non-adhesive portion. Therefore, it is preferred to form the slits 4a considering the matter above.

It is preferred that the adhesive agent layer 3 be formed relatively thick so as to be attachable to an adherend having a complicated shape or a rough surface with sufficient adhesive strength, and the adhesive agent layer 3 is formed, for example, to a thickness of 5 µm or more, preferably 10 µm or more.

The printing layer 5 formed on the other surface of the support 2 is not limited to a thermosensitive recording layer, and may be a layer printable by a thermal transfer method or an ink-jet method. The printing layer 5 may be a layer on which printing has already been performed.

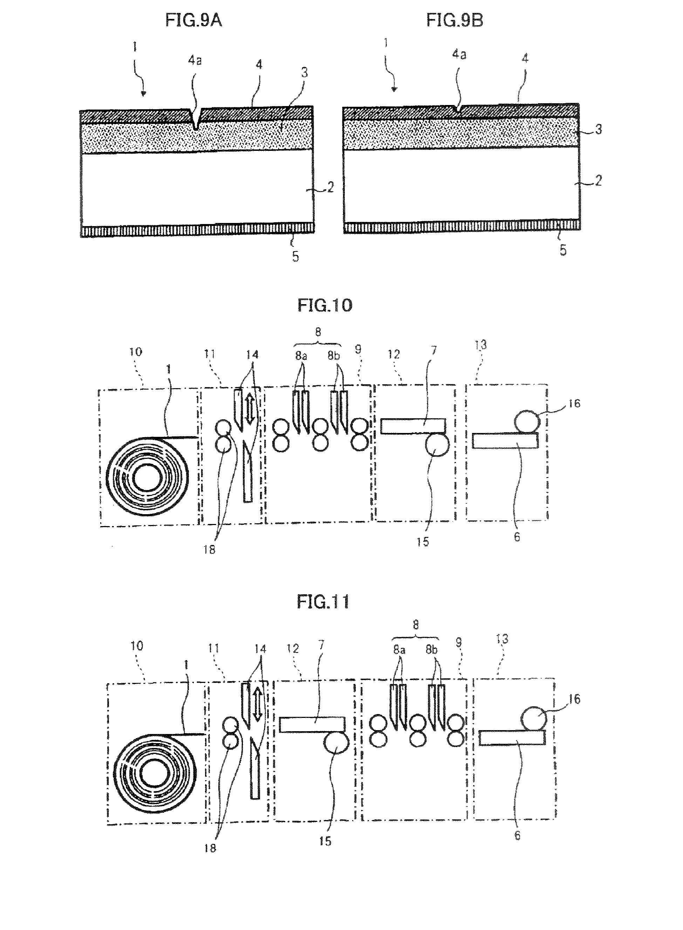

The slits 4a can be formed by driving a cutter after forming the non-adhesive layer 4 on the adhesive agent layer 3. In the case of forming the slits 4a extending in the same direction as the transport direction of the adhesive label 1 as in the examples illustrated in FIGS. 8B, 8C, and 8F, a cutter member fixed to a particular position in the width direction of the adhesive label 1, such as a fixed cutter or a ring cutter, may be used. When the slits 4a are formed deep in the adhesive agent layer 3 as illustrated in FIG 9A, an adhesive agent adheres to a blade of the cutter member, which may influence sharpness of the cutter member. When the slits 4a are too shallow as illustrated in FIG 9B, the desired openings 4b may not be formed. Thus, it is necessary to regulate the size of a cutter so as to form the slits 4a to an appropriate depth. In the case where such regulation is difficult, intermittent slits 4a may be formed as in the example illustrated in FIG 2C. In this case, there is a risk that slight unevenness may be formed in the printing layer 5 positioned on the opposite side of the non-adhesive layer 4. Therefore, it is preferred that the intermittent slits 4a be formed in the case where the printing layer 5 on which printing has already been performed is provided, instead of a thermosensitive recording layer or a layer recordable by an ink-jet method or the like.

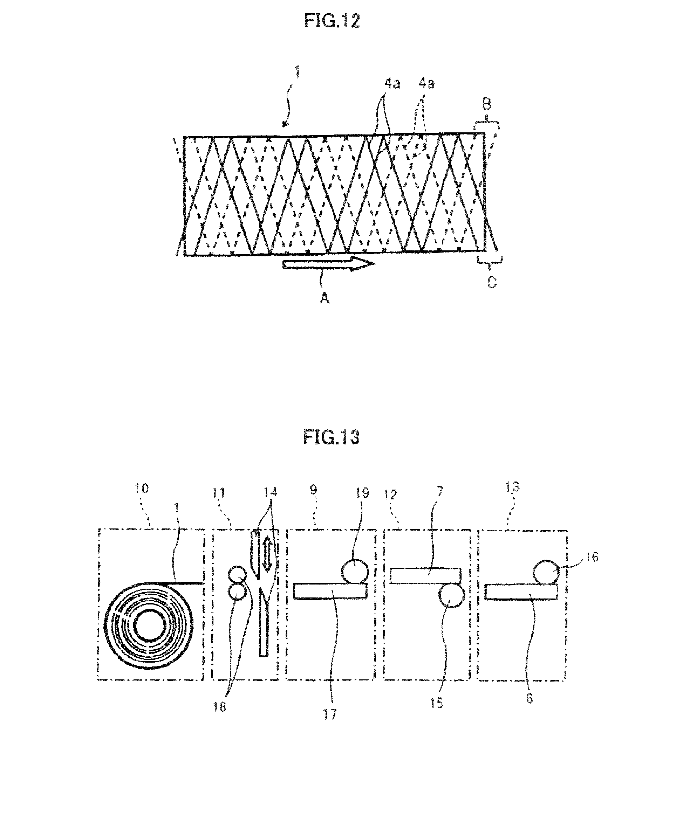

In the case of forming the slits 4a extending in the direction different from the transport direction of the adhesive label 1 as in the examples illustrated in FIGS. 8A to 8E, and 8G, the slits 4a can be formed by moving a cutter in the width direction of the adhesive label 1 while transporting the adhesive label 1. The number of cutters to be driven simultaneously may be determined depending upon the pitch of the slits 4a and the transport speed of the adhesive label 1. For example, a slit formation part 9 is provided, which includes a plurality of columns of cutters 8 (two sets of cutters 8a and 8b each constructed of two blades in the examples illustrated in FIGS. 10 and 11) at positions corresponding to both ends in the width direction of the adhesive label 1. The slit formation part 9 may be placed on an upstream side from the recording part 12 as illustrated in FIG 10 or placed on a downstream side from the recording part 12 as illustrated in FIG 11. As illustrated in FIG 12, when one set of cutters 8a are moved from an initial position B and the other set of cutters 8b are moved from an initial position C respectively in the width direction of the adhesive label 1 while the adhesive label 1 is being transported in a direction indicated by an arrow A, the slits 4a can be formed into a diagonal lattice shape. In FIG 12, for convenience, the slits 4a formed by the one set of cutters 8a are indicated by broken lines, and the slits 4a formed by the other set of cutters 8b are indicated by solid lines.

Further, by transporting the adhesive label 1 while fixing a plurality of cutters placed, for example, at intervals with a predetermined pitch at predetermined positions in the width direction of the adhesive label 1, the slits 4a can be formed in the same direction as the transport direction. The slits 4a thus formed are illustrated in FIG 8F. According to the slits 4a thus formed, the risk that a part of the non-adhesive layer 4 is peeled due to the load during transportation is decreased. However, the regions of the non-adhesive layer 4 divided by the slits 4a have a very elongated shape, and hence, it is preferred to remove the regions of the non-adhesive layer 4 by mechanical peeling.

Further, the slits 4a with a free layout can also be formed using a cutter of a half-cutting die for die-cut paper or the like.

Alternatively, for example, a thermal head 17 and a platen roller 19 are provided in the slit formation part 9 as illustrated in FIG 13, instead of the cutters, and the slits 4a may be formed by melting the non-adhesive layer 4 by heating with the thermal head 17. In this case, the slits 4a can be formed with a free layout. Because the heat generation temperature can be adjusted with good precision by output control of the thermal head 17, the size and depth of the slits 4a can be controlled with good precision. The slit formation part 9 and the recording part 12 can also be replaced from each other, as discussed below.

Although not illustrated, the recording part 12 may have a slit formation function. In this case, by heating the non-adhesive layer 4 using the thermal head 7 that is the heating means of the recording part 12 to form the openings 4b, the components are commonized and cost can be reduced. After the slits 4a are formed in the non-adhesive layer 4 in the recording part 12, the adhesive label 1 may be reversed (turned over) to be fed backward, and recording may be performed onto the printing layer 5 using the same thermal head 7 as that used for forming the slits 4a. Consequently, the apparatus can be simplified and downsized.

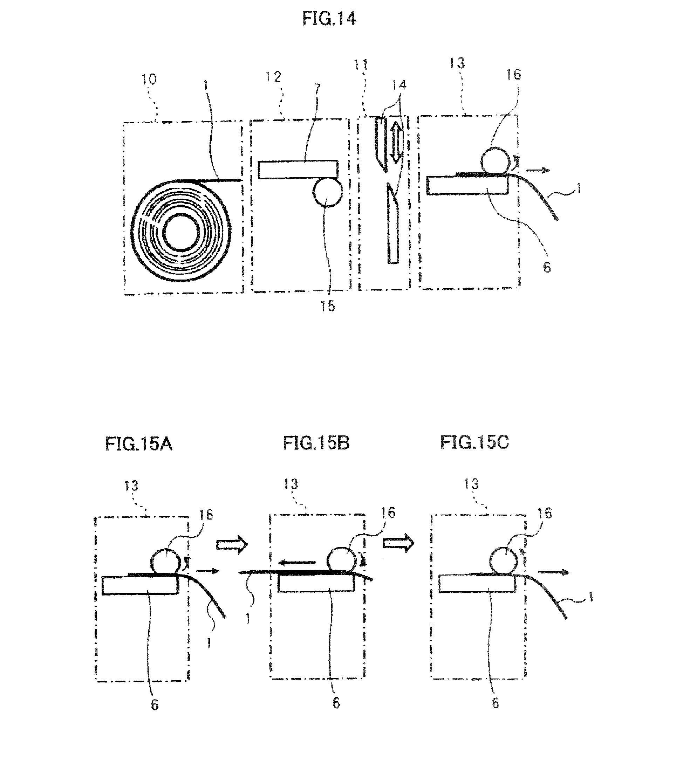

Further, as illustrated in FIGS. 14 and 15A to 15C, the adhesiveness exhibiting part 13 may have a slit formation function. In this case, by heating the non-adhesive layer using the thermal head 6 of the adhesiveness exhibiting part 13 to form the openings 4b, the components are commonized and cost can be reduced. After the slits 4a are formed in the non-adhesive layer 4 in the adhesiveness exhibiting part 13 as illustrated in FIG 15A, the adhesive label 1 may be fed backward as illustrated in FIG 15B, and the openings 4b may be formed by allowing the non-adhesive layer 4 to contract thermally by heating with the thermal head 6 again used for forming the slits 4a in the adhesiveness exhibiting part 13 as illustrated in FIG 15C. Consequently, the apparatus can be simplified and downsized. In this case, the adhesive label 1 is not required to be reversed (turned over). The formation of the slits 4a and the formation of the openings 4b are discriminated by controlling the drive conditions of the thermal head 6.

Although not illustrated, the slits 4a may be formed with heat generated by the irradiation of a laser. In this case, by controlling the output and focal point of a laser, the size and depth of the slits 4a can be controlled with good precision.

According to these methods, the desired slits 4a can be formed with good precision. Then, the intermittent slits 4a as illustrated in FIG 2C can also be formed, besides the continuous slits 4a as illustrated in FIG 2B. Thus, the risk that a part of the non-adhesive layer 4 is peeled during transportation of the adhesive label 1 in the apparatus for producing an adhesive label is further decreased.

When the slit formation part 9 is placed on a downstream side from the recording part 12 in the apparatus for producing an adhesive label of FIGS. 11, 14, etc., the risk that a part of the non-adhesive layer 4 is peeled due to a pressure applied from the platen roller 15 in the recording part 12 is eliminated.

As a method of forming the slits 4a as described above, it is preferred to use the heating means such as the thermal head 6 from the viewpoint of precision and simplification of the configuration. On the other hand, it is preferred to use the cutters 8 from the viewpoint of current consumption. Particularly, in the case of forming the slits 4a extending in the transport direction of the adhesive label 1, there is an advantage that the configuration is simple because a plurality of fixed cutters only need to be arranged.

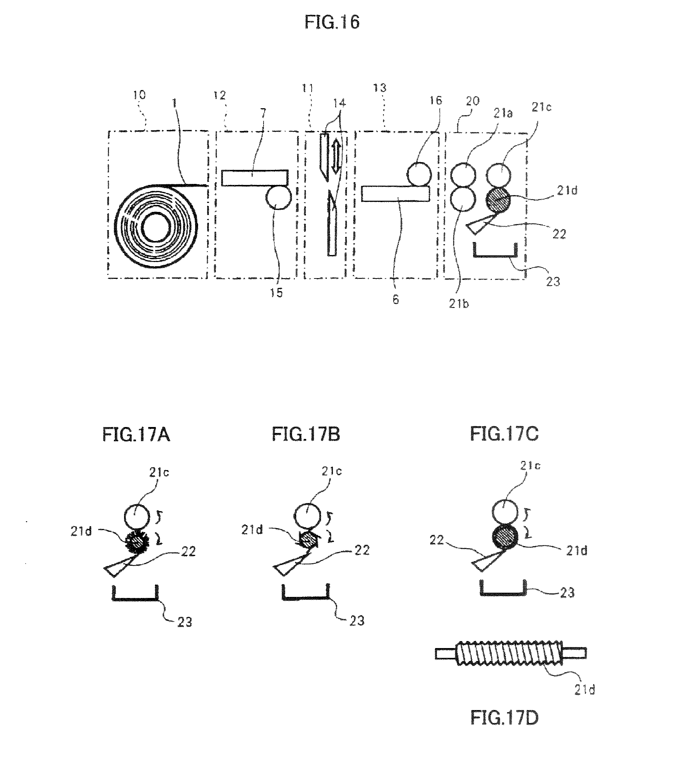

As illustrated in FIGS. 16 and 17A to 17D, a residue removal part 20 for removing a small chip (residue 4c) of the material constituting the non-adhesive layer 4, which remains after the openings 4b are formed, may be provided in the apparatus for producing an adhesive label. For example, in the configuration illustrated in FIG 16, a transport roller 21d that comes into contact with the non-adhesive layer 4 on a downstream side, of transport rollers 21a to 21d for transporting the adhesive label 1, is rotated at a circumferential speed different from those of the other transport rollers 21a to 21c. Due to the difference in circumferential speed, the small chip (residue 4c) of the non-adhesive layer 4 remaining on the adhesive label 1 can be peeled from the adhesive label 1 to adhere to the outer circumferential surface of the transport roller 21d. Further, the residue 4c on the outer circumferential surface of the transport roller 21d can be scraped off forcefully by a movable residue removal claw 22. In this case, it is preferred that the surface of the transport roller 21d be coated with a non-adhesive (low-friction) material because there is a risk that the lower adhesive agent layer 3 may also be partially scraped off when the residue 4c is scraped off. Further, it is preferred that the surface of the residue removal claw 22 be also coated with a non-adhesive (low-friction) material or the residue removal claw 22 be formed of a non-adhesive (low-friction) material. In this configuration, because the residue 4c is peeled to be removed forcefully by a physical force, the residue 4c can be removed using a member made of a low-friction material or a member coated with a low-friction material, as long as the residue 4c is not removed using the friction force of rubber or the like. If a container 23 such as a tray for receiving the residue 4c that has been scraped off is placed in a lower portion of the residue removal part 20, it becomes easy to clean the apparatus for producing an adhesive label.

FIGS. 17A to 17C illustrate other examples of the residue removal part 20. In the example illustrated in FIG 17A, a transport roller 21d in a brush shape is used. In the example illustrated in FIG 17B, a plurality of protrusions in a spatula shape are provided on the outer circumferential surface of the transport roller 21d. In the example illustrated in FIGS. 17C and 17D, a transport roller 21d provided with a helical screw is used. In any of the configurations, by rotating the transport roller 21d at a circumferential speed different from those of the other transport rollers 21a to 21c, the residue 4c of the non-adhesive layer 4 is scraped off from the adhesive label 1. Then, the residue 4c on the outer circumferential surface of the transport roller 21d is scraped off by the residue removal claw 22 that abuts against the outer circumferential surface of the transport roller 21d, and received in the container 23.

The residue removal part 20 may have a configuration in which the residue 4c is peeled by allowing the vibration of a piezoelectric element or a vibrator to act. In this case, a stylus connected to a piezoelectric element or a drive body vibrates to peel the residue 4c of the non-adhesive layer 4 to drop the residue 4c downward.

Further, by applying a force physically to mechanically peel a part of the non-adhesive layer 4, although not shown, instead of heating the non-adhesive layer 4 using the heating means such as the thermal head 6, the openings 4b may be formed to expose the adhesive agent layer3. In this case, if the slits 4a are not provided, it is very difficult to peel the non-adhesive layer 4. However, it becomes much easier if the slits 4a are provided. The residue 4c of the non-adhesive layer 4 peeled in the apparatus for producing an adhesive label becomes a relatively large waste because the residue 4c does not contract thermally, and hence, it is preferred to provide a container or the like for collecting the waste. According to this configuration, heating for forming openings is not required, which further reduces energy.

According to the above-mentioned adhesive label, method of producing an adhesive label, and apparatus for producing an adhesive label according to the present invention, the entire surface of the adhesive agent layer 3 of the adhesive label 1 is covered with the non-adhesive layer 4 made of a resin film or a resin coating film, and the slits 4a are formed in the non-adhesive layer 4. Thus, when heat is applied to the non-adhesive layer 4, thermal contraction occurs with respect to the slits 4a, and the openings 4b with a desired shape and size are formed easily.

The adhesive label 1 has no release paper. Therefore, when the adhesive label 1 is wound into a roll shape, the roll diameter can be rendered small, with the result that the apparatus for producing an adhesive label can be downsized. In other words, the number of windings can be increased under the same size, and the frequency for replacing rolls can be reduced. Further, the release paper is not required, which contributes to the protection of environment and saves time and labor for peeling and disposing of the release paper. Further, an adhesive portion and a non-adhesive portion can easily be mixed freely at arbitrary positions of an adhesive surface of the adhesive label 1. Further, the large openings 4b can be formed easily with low energy, using the slits 4a, and as a result, high adhesive strength can be obtained, which enhances energy efficiency.

Although the slits 4a may be formed when the adhesive label 1 is wound into a roll shape, the slits may also be formed in the adhesive label 1 unwound from the roll in the apparatus for producing an adhesive label. In this case, because it is not necessary to prepare the adhesive label 1 with the slits 4a previously formed therein, the production cost of the adhesive label can be reduced. In this case, the slits 4a are not present when the adhesive label is stored in a roll shape. Therefore, an adhesive agent of the adhesive agent layer 3 does not seep through the slits 4a to cause blocking, and the adhesive label can be stored stably for a long period of time.

The small chip (residue 4c) of the material constituting the non-adhesive layer 4, which remains after the formation of the openings 4b, has a size that hardly influences the adhesive strength of the entire adhesive label 1. Therefore, it is not necessarily required to remove the small chip, which avoids the generation of waste.

On the other hand, in order to further enhance the adhesive strength, the residue 4c of the material constituting the non-adhesive layer 4 may also be removed. In this case, there is no obstacle above the adhesive agent layer 3, and hence, the adhesive label can be handled easily in the same way as the conventional adhesive label.

### [Specific examples of a material for each layer of an adhesive label]

Each layer of the adhesive label 1 can be formed by attaching a film, applying a material in a molten state, or a coextrusion method. In the case of applying a material, there is used coating means, which is selected from a bar coater, an air knife coater, a squeeze coater, and a gravure coater, considering the viscosity of the material, the thickness to be formed, and the dry process.

In producing the adhesive label 1 in a multi-layered structure, there is a risk that curls caused by a residual stress, thermal contraction, and moisture absorption may be formed in the material of each layer, depending upon the layer formation and the treatment after the layer formation. Thus, for forming each layer, dimensional stability, surface treatment, moisture resistance, solvent resistance, mechanical strength, flatness, etc. need to be considered. In particular, regarding the non-adhesive layer 4 as the surface layer of the adhesive label 1, it is also important to consider the friction coefficient of a layer surface and the flexibility at a time when the non-adhesive layer 4 comes into contact with the heating means of the apparatus for producing an adhesive label.

Based on the above, specific non-limiting examples of the material for each layer of the adhesive label 1 according to the present invention are described below. The non-adhesive layer 4 is formed of a resin film that is made of: an olefin-based resin which is utilized as a general-purpose resin in various applications, such as polyethylene (PE), polyvinyl chloride (PVC), or polypropylene (PP); a multilayer polyolefin (PO) film obtained by laminating films of those resins (such as a PE film and a PP film); polystyrene (PS), polyethylene terephthalate (PET), or a hybrid film obtained by laminating a PS film and a PET film; an ethylene-vinyl acetate copolymer (EVA)-based resin; a polyvinyl alcohol (PVA)-based resin; a polylactic acid (PLA)-based resin as a plant-based material; or the like. It is preferred that the non-adhesive layer 4 be stable chemically and physically at room temperature and be used in a temperature range set so that the non-adhesive layer 4 can be heated by the heating means such as a general thermal head. In the case where the non-adhesive layer 4 is made of a resin film, it is preferred that the non-adhesive layer 4 be a uniaxially stretched film or biaxially stretched film.

The adhesive agent layer 3 is made of a pressure-sensitive adhesive agent that can be adhesive only by applying a slight pressure at room temperature for a short period of time, without using water, a solvent, heat, or the like. It is preferred that the pressure-sensitive adhesive agent have a cohesion, elasticity, and high adhesiveness, and can be peeled from a hard smooth surface. The adhesive agent layer 3 is generally formed of: a rubber-based adhesive agent such as natural rubber, styrene-butadiene rubber (SBR), or polyisobutylene rubber; an acrylic adhesive agent having a cross-link system including a monomer having a low glass transition point and a cross-linking agent; an acrylic adhesive agent having a non-cross-linked system obtained by copolymerizing a monomer having a low glass transition point and a monomer having a high glass transition point; a silicone-based adhesive agent formed of a silicone having a high cohesion and a silicone resin having a high adhesive strength; or the like. Further, when the openings 4b are formed by heating, it is preferred that the adhesive agent layer 3 be made of a material having a large difference in heat capacity from the upper non-adhesive layer 4.

The printing layer 5 formed on the other surface of the support 2 is not limited to the one on which thermosensitive recording can be performed using a thermal head, and may be those on which recording can be performed by other printing methods such as an ink-jet method and an electrophotographic method, or may be a layer on which printing has already been performed.

The foregoing description has been given by way of example only and it will be appreciated by a person skilled in the art that modifications can be made without departing from the scope of the present invention.

## Claims

1. An adhesive label (1), comprising:
a support (2);
an adhesive agent layer (3) which is made of a pressure-sensitive adhesive agent, and formed on one surface of the support; and
a non-adhesive layer (4) which is formed on the adhesive agent layer, and in which an opening (4b) can be formed by application of at least one of heat and a physical force, the opening exposing the adhesive agent layer below the non-adhesive layer,
wherein the non-adhesive layer comprises a slit (4a) with respect to which the opening can be formed.

2. An adhesive label according to claim 1, wherein the non-adhesive layer (4) is made of one of a resin film and a resin coating film.

3. An adhesive label according to claim 1 or claim 2, wherein a plurality of the slits are formed so as to divide the non-adhesive layer into a plurality of regions (P).

4. An adhesive label according to any one of the preceding claims, further comprising a printing layer (5) provided on another surface of the support.

5. A method of producing an adhesive label, comprising:
applying at least one of heat and a physical force to a non-adhesive layer (4) formed on an adhesive agent layer (3), which is made of a pressure-sensitive adhesive agent and provided on one surface of a support (2), to form an opening (4b) with respect to a slit (4a) formed in the non-adhesive layer; and
exposing the adhesive agent layer through the opening.

6. A method of producing an adhesive label according to claim 5, further comprising forming the slit (4a) in the non-adhesive layer before the applying of the one of the heat and the physical force to the non-adhesive layer.

7. A method of producing an adhesive label according to claim 5 or claim 6, further comprising printing a printing layer (5) provided on another surface of the support.

8. An apparatus for producing an adhesive label, comprising an adhesiveness exhibiting part (13), which is configured to:
apply at least one of heat and a physical force to a non-adhesive layer (4) formed on an adhesive agent layer (3), which is made of a pressure-sensitive adhesive agent and provided on one surface of a support (2), to form an opening (4b) with respect to a slit (4a) formed in the non-adhesive layer; and
expose the adhesive agent layer through the opening.

9. An apparatus for producing an adhesive label according to claim 8, further comprising a slit formation part (9) for forming the slit in the non-adhesive layer.

10. An apparatus for producing an adhesive label according to claim 9, wherein the slit formation part (9) comprises a cutter (8a, 8b) for cutting the non-adhesive layer.

11. An apparatus for producing an adhesive label according to any one of claims 8 to 10, wherein the adhesiveness exhibiting part comprises a thermal head (6) for heating the non-adhesive layer.

12. An apparatus for producing an adhesive label according to claim 11, wherein the apparatus is further configured such that the thermal head of the adhesiveness exhibiting part heats a printing layer provided on another surface of the support to print the printing layer.

13. An apparatus for producing an adhesive label according to any one of claims 8 to 10, wherein the adhesiveness exhibiting part comprises a mechanism for forming the opening by applying the physical force to the non-adhesive layer.

14. An apparatus for producing an adhesive label according to any one of claims 8 to 11 and 13, further comprising a recording part (12) including a thermal head (7) for heating a printing layer (5) provided on another surface of the support, for printing the printing layer by heating with the thermal head.
